# EUROPEAN PATENT SPECIFICATION

(11) **EP 2 131 959 B1**
(45) Date of publication and mention of the grant of the patent: **19.06.2019**
(21) Application number: 08718562.5
(22) Date of filing: 07.03.2008
(51) Int. Cl.: B02C 13/20, B02C 13/30, F16C 33/10, F16N 7/00, F16H 57/04, B02C 13/26

(54) **IMPACT MILL**
SCHLAGMÜHLE
BROYEUR À CHOCS

(30) Priority: 10.04.2007 FI 20070272
(43) Date of publication of application: 16.12.2009
(73) Proprietor: Fractivator OY, 33880 Lempäälä (FI)
(72) Inventor: VIRTANEN, Pentti, FI-37630 Valkeakoski (FI)
(74) Representative: Kolster Oy Ab
(86) International application number: PCT/FI2008/050109
(87) International publication number: WO 2008/122691

(56) References cited:
- GB-A- 934 793
- GB-A- 943 319
- GB-A- 1 181 210
- GB-A- 1 531 254
- GB-A- 1 531 254
- JP-A- 09 166 146
- US-A- 2 928 616
- US-A- 4 403 868
- US-A- 4 792 099
- US-A- 4 891 038

## Description

This invention relates to an impact mill as defined in the preamble of claim 1, wherein the lubrication of the shafts of the mill, which are located within each other, is arranged in a novel way. The invention concerns also a method for the lubrication of the bearings of the impact mill.

### BACKGROUND OF THE INVENTION

The impact mill is an apparatus comprising two rotor discs mounted on coaxial shafts, briefly rotors. Onto the rotors are attached blades, parallel with the shafts, where said blades are arranged in blade rings, located within each other, wherein every other ring is located on the upper rotor and every other on the lower rotor. The rotors can be rotated in opposite directions or in the same direction with different speeds. This means that the blade rings do not touch each other or the second rotor. A housing is normally fitted around the rotors.

In impact mills where the shafts are arranged within each other and extend towards the same side of the rotors, a suitable feeding opening for supply of material to be treated in the impact mill can be arranged into the centre of the housing on the opposite side of the rotor assembly. Such impact mills have found versatile uses and they are described in many patent publications for different uses. As examples can be mentioned cleaning of gases and liquids (FI 98052), slurrying of materials into a liquid (WO 96/18454), defibrating of fibre-containing materials (WO 98/29596), treatment of reject from a paper mill (WO 99/54045), treatment of reject streams of fillers (WO 2001/038632), removing of printing ink from fibre material (WO 2003/031717), pre-treatment of organic wastes (WO 2004/062808) and processing of digestion sludge into useful products (WO 2005/121033).

In all the aforementioned publications the shafts of the apparatus are driven by two separate motors. Instead, the publication WO 2006/123010 discloses an impact mill, the shafts of which are driven by one and the same motor by a transmission machinery. In a particularly preferred arrangement a conic gear, fitted on the driving shaft of the motor, drives conic gears fitted on both of the rotor shafts. The size of this apparatus is small because the shafts can be mounted in bearings directly to each other, instead of to an intermediate support as in conventional apparatuses. Thus the apparatus can be easily transported for example behind a tractor, and the apparatus can be connected to the transmission apparatus of the tractor. It has also been noted that such the energy consumption of such an impact mill is considerably lower than that of a conventional impact mill, equipped with two motors and vee belt driving.

A problem relating to the apparatus described above, where the rotor shafts must be mounted in bearings directly to each other, is the arrangement of the lubrication for the bearing of the inner shaft. In a conventional impact mill, driven by two motors, the lubrication as well as the transport of compressed air into the space between the rotor brackets for protection of the bearings and the gaskets, have been possible to arrange by making channels for these purposes into the fixed support between the inner shaft and the outer shaft. Such an arrangement is not possible when the shafts are mounted in bearings directly to each other. Document GB 943319 discloses a disintegrating mill.

### OBJECT AND SUMMARY OF THE INVENTION

The object of this invention is particularly to achieve lubrication of the bearings of the inner shaft in impact mills where the inner shaft and the outer shaft are mounted in bearings directly to each other. Another object is to achieve means for transportation of a gas, such as air, or a liquid into the space between the rotor brackets for protection of the bearings and the gaskets.

The object is further to achieve an integrated lubrication system, extending also to the lubrication of the gears of the transmission machine and the lubrication of the bearings of the outer shaft, where the oil flows are combined and returned along the same route.

The object of the invention is to achieve a more simple arrangement for the lubrication of the bearings of the inner shaft also in conventional impact mills, where the shafts are mounted in bearings to a fixed intermediate support, in order to avoid arrangement of numerous channels into the support of the shafts.

The invention thus relates to an impact mill and a method characterized by the features of the independent claims.

### BRIEF DESCRIPTION OF THE DRAWINGS

Figure 1 shows a lubrication arrangement for the shafts of an impact mill according to prior art.
Figure 2 shows as a vertical section the impact mill, with shafts arranged within each other and mounted in bearings to each other, in one embodiment of the invention.
Figure 3 shows the rotor part as a cross section along the line A-A' shown in figure 2.
Figure 4 shows the shaft part of figure 2 as enlarged.
Figure 5 shows the lower part of figures 2 and 4 more in detail, showing the mounting in bearings of the feeding end of the pipe in the inner shaft.
Figure 6 shows the upper part of figure 2 more in detail.
Figure 7 shows as a vertical section the impact mill, with shafts arranged within each other and mounted in bearings to each other, in a second embodiment of the invention.
Figure 8 shows as a vertical section the impact mill, with shafts arranged within each other and mounted in bearings to each other, in a third embodiment of the invention.
Figure 9 shows as a vertical section the impact mill, with shafts arranged within each other and mounted in bearings to each other, in a fourth embodiment of the invention.
Figure 10 shows as a vertical section the impact mill, with shafts arranged within each other and mounted in bearings to each other, in a fifth embodiment of the invention.
Figure 11 shows as a vertical section the impact mill, with shafts arranged within each other and mounted in bearings to each other, in a sixth embodiment of the invention, where the oil channel in the outer shaft is shown.
Figure 12 shows an enlargement of the upper part of figure 11, where the gas or liquid channel in the outer shaft is shown.
Figure 13 shows as a vertical section the impact mill, with shafts arranged within each other and mounted in bearings to each other, in a seventh embodiment of the invention.

### DETAILED DESCRIPTION OF THE INVENTION

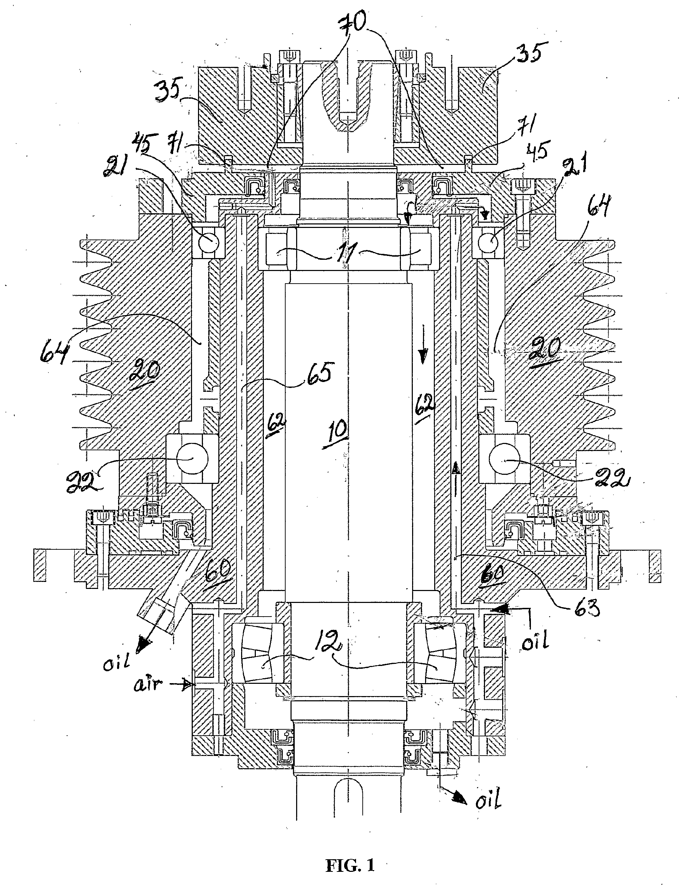

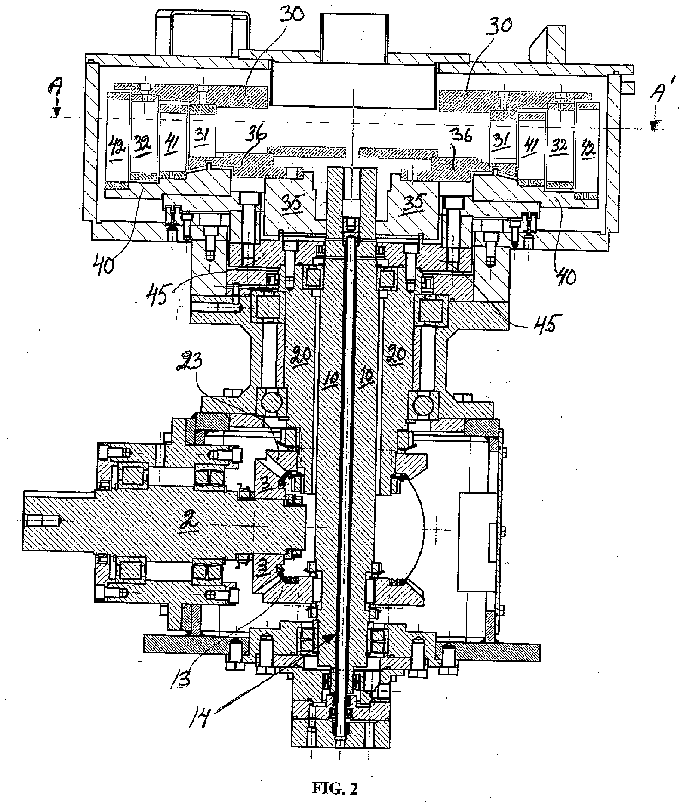

Figure 1 shows a vertical section of the shafts of an impact mill according to prior art. The shafts 10 and 20 of the rotors are located on the same side of the rotors (the rotors are not shown in this figure; see figure 2) and they are arranged within each other so that the inner shaft 10 extends inside the shaft support 60, and the outer shaft extends outside the support. The shafts 10 and 20 are driven by two separate motors so that they rotate in opposite directions or in the same direction by at different speeds. The inner shaft 10 is mounted on the fixed shaft support 60 by its upper bearing 11 and its lower bearing 12. Similarly, the outer shaft 20 is mounted on the shaft support 60 by its upper bearing 21 and its lower bearing 22. In the shaft support is made a channel 63 into which is fed an oil flow, which is split up and lubricates the bearings 21 and 22 of the outer shaft 20 as well as the bearings 11 and 12 of the inner shaft 10. The oil flows in the space 64 between the outer shaft 20 and the shaft support 60 from the upper bearing 21 to the lower bearing 22 and then out. The oil flowing to the upper bearing 11 of the inner shaft flows further into the space 62 between the inner shaft and the shaft support 60 to the lower bearing 12 of the inner shaft and then out. In the shaft support 60 is made a channel 65 in which air is transported to the space 70, located between the bracket 35 of the upper rotor and the bracket 45 of the lower rotor, and through the gasket 71 into the rotor space. The air stream prevents the material to be treated in the impact mill from entering the bearings of the shafts.

The known lubrication solution shown in figure 1 cannot be used when it is desirable to mount the shafts 10 and 20 on bearings directly to each other. Such a mounting arrangement is unavoidable when the shafts are driven by one and the same motor. Also when the shafts are driven by different driving apparatuses, mounting of the shafts on bearings directly to each other may be useful.

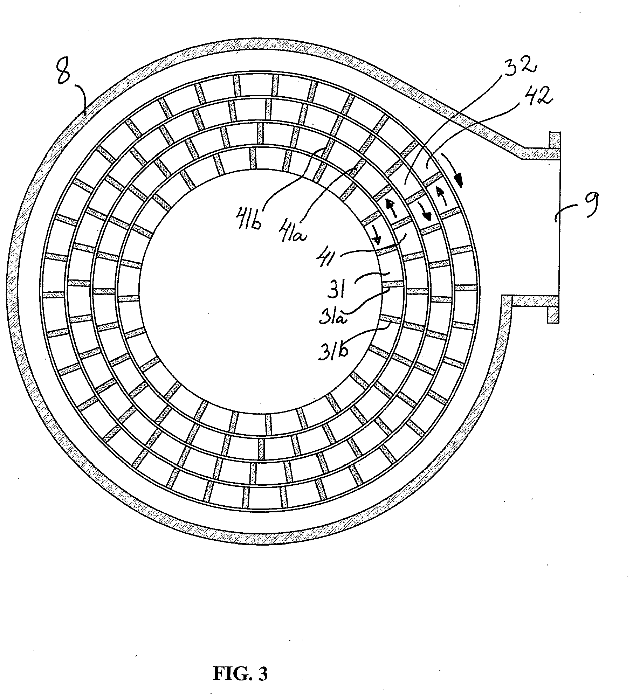

Figure 2 shows as a vertical section the impact mill, with shafts 10 and 20 arranged within each other and mounted in bearings to each other, in an embodiment of the invention where the shafts are driven by one and the same motor. On the driving shaft 2 of the motor is mounted a conic gear 3, which drives a conic gear 13 mounted on the inner shaft 10 as well as a conic gear 23 mounted on the outer shaft 20. The inner shaft 10 is fixedly connected with the upper rotor 30 via the bracket 35, the extended bracket 36 and the innermost blade ring 31. The outer shaft 20 is connected with the lower rotor 40 via the bracket 45. Thus the inner shaft 10 rotates the upper rotor 30, and the outer shaft 20 rotates the lower rotor 40. The coaxial rotors 30 and 40 comprise within each other arranged blade rings 31, 32, and 41, 42 so, that the rings 31 and 32 are located in the upper rotor 30 and the rings 41 and 42 are located in the lower rotor 40. The blade rings comprise blades 31a, 31b,... 41a, 41b.... etc. according to known technique as can be seen in more detail in figure 3, which is a cross section of the rotor part along the line A-A' shown in figure 2. Figure 3 shows more in detail how the adjacent blade rings 31, 41..., equipped with blades 31a, 31b,... and 41a, 41b..., rotate in opposite directions as shown by the arrows. Number 8 denotes the wall of the housing enveloping the rotors and number 9 denotes the discharge opening for the material treated in the apparatus.

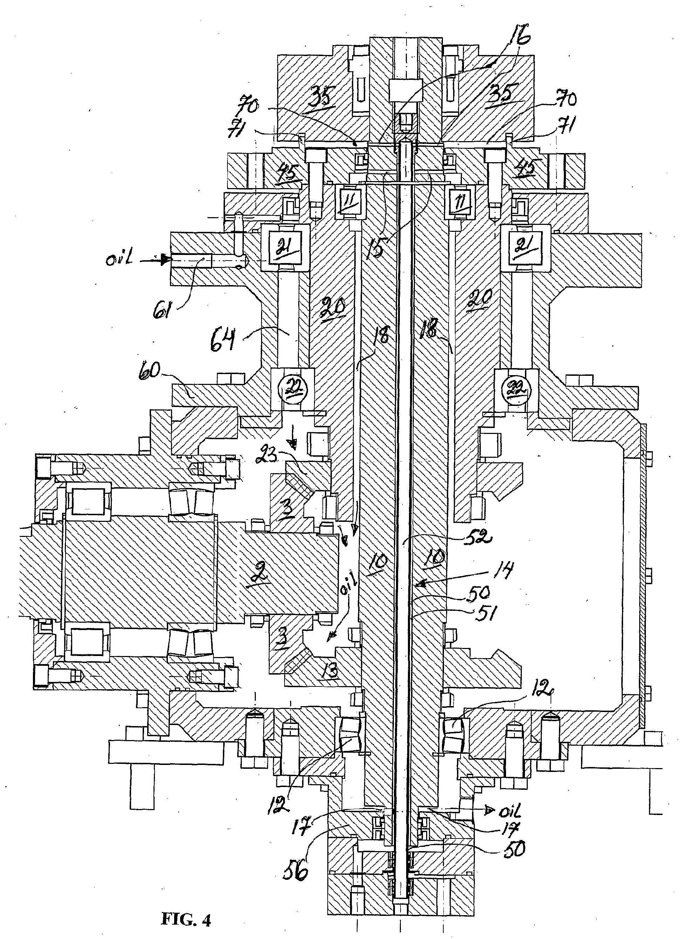

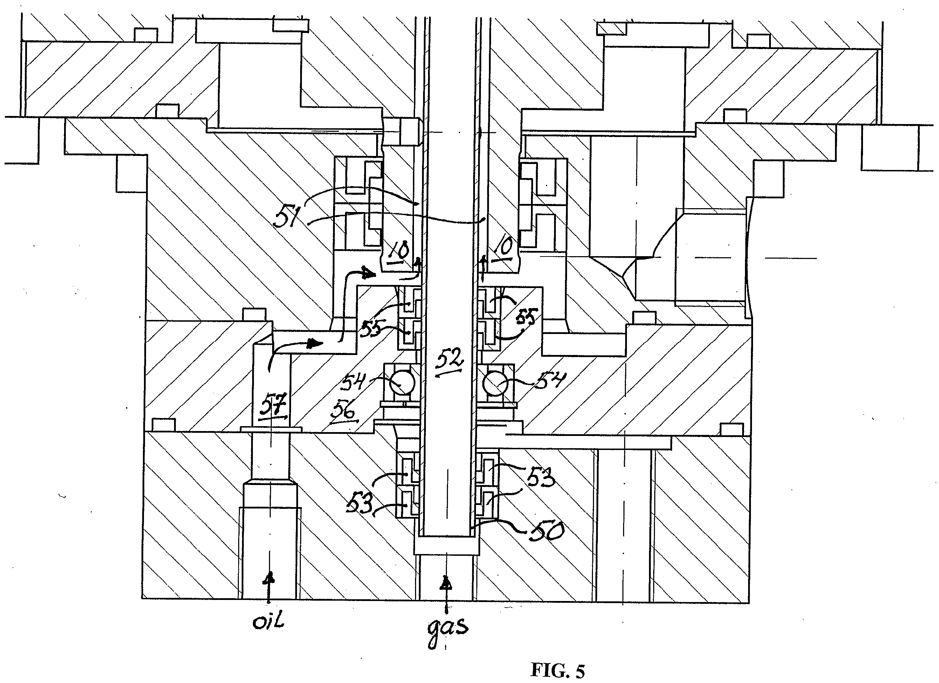

The shaft part in figure 2 is shown more in detail in figure 4. According to the invention, a cylindrical space 14 is arranged inside the inner shaft 10 so as to form a channel extending in the longitudinal direction of the shaft. According to the solution shown in the figure, inside the cylindrical space is fitted a pipe 50, having so much smaller diameter than that of the said cylindrical space so that a space 51 is formed around the pipe 50. Thus, the inner space 52 of the pipe forms one channel and the space 51 surrounding the pipe a second channel. The pipe 50 is preferably fixedly connected with the inner shaft 10, where the part of the pipe protruding the inner shaft is mounted on bearings 54 to the bottom support 56, as can be seen in more detail in figure 5, which is the lower part of figure 4 shown more in detail. The numbers 53 and 55 denote gaskets. Number 57 denotes a channel made in the bottom support, through which channel oil is fed into the space 51 between the inner shaft 10 and the pipe 50. Inside the pipe 50 is fed air or another suitable gas or liquid.

The oil flows through the oil channel 51 shown in figure 4 towards the rotor part. In the inner shaft 10, above its upper bearing 11, is arranged a channel 15 which opens to the periphery of the inner shaft and which is connected with the oil channel 51, extending in the longitudinal direction of the shaft. Thus the oil flows through the channels 51 and 15 to the upper bearing 11 and therefrom further into the free space 18 between the shafts 10 and 20 to the lower bearing 12 and then out. A channel 17 for discharge of the oil is arranged beneath the lower bearing of the inner shaft. From the arrangement shown in figure 4, where the shafts are driven by one and the same motor, and where on the driving shaft 2 of the motor is fitted a conic gear 3 driving the conic gear 13 fitted to the inner shaft 10 as well as the conic gear 23 fitted to the outer shaft 20, one can see that the oil as it flows downwards towards the lower bearing 12 of the inner shaft flows through the space between the conic gear 3, fitted to the driving shaft of the motor, and the conic gear 13 to be driven, fitted on the inner shaft, and lubricates this conic gear pair.

The lubrication of the bearings 21 and 22 of the outer shaft 20 is arranged so that into the shaft support is made an oil channel 61, which is in connection with the space 64 between the support and the outer shaft, for conveying the oil from the upper bearing 21 to the lower bearing 22. In the transmission arrangement shown by the figure, the oil discharged from the lower bearing 22 is conveyed between the conic gear 3 fitted on the driving shaft 2 of the motor and the conic gear 23 to be driven, arranged on the outer shaft, after which the oil flow join the oil returning through channel 18 from the upper bearing of the inner shaft.

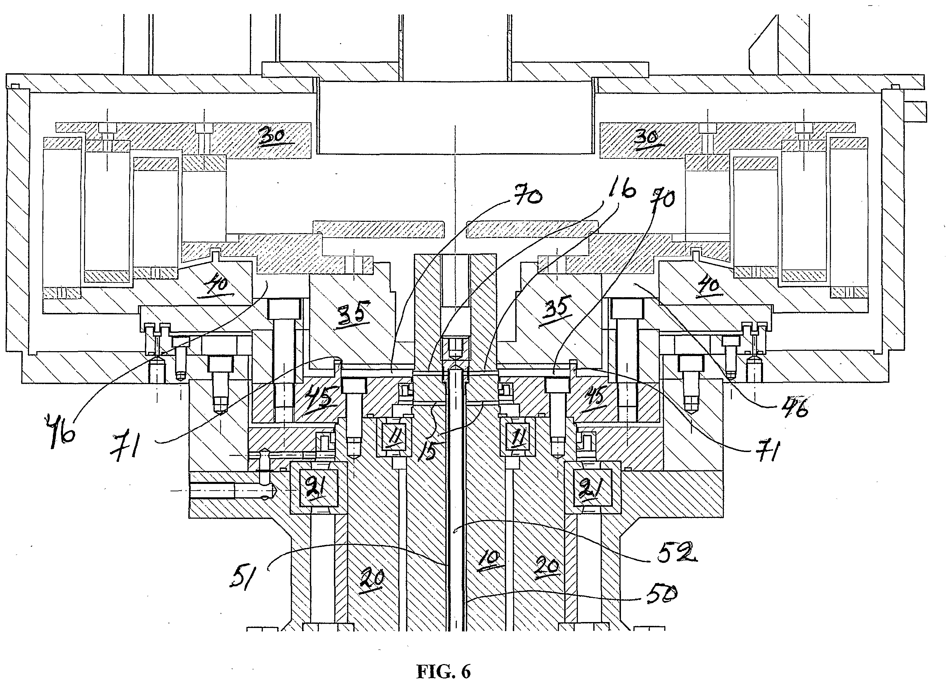

At the upper end of the pipe 50 a channel 16 has been made in the inner shaft, where said channel is in connection with the inner space 52 of the pipe, and which opens to the periphery of the inner shaft. Hereby air or another suitable gas or a liquid, which is fed into the pipe, is allowed to discharge into the space 70 between the brackets 35 and 45 of the upper and lower rotors. This ensures the formation of overpressure in the space 46 behind the lower rotor 40 (see figure 6, which is an enlargement of the upper part of figures 2 and 4). The overpressure prevents the material to be treated in the impact mill from damaging the gasket 71 and moving forward into the bearings of the shafts. This arrangement where the gas or liquid discharges from the periphery of the inner shaft is more efficient than the solution disclosed in WO 96/19283, where the gas discharges farther from the inner shaft and there is a risk that particles may accumulate into the vicinity of the surface of the inner shaft and therefrom further move into the bearings.

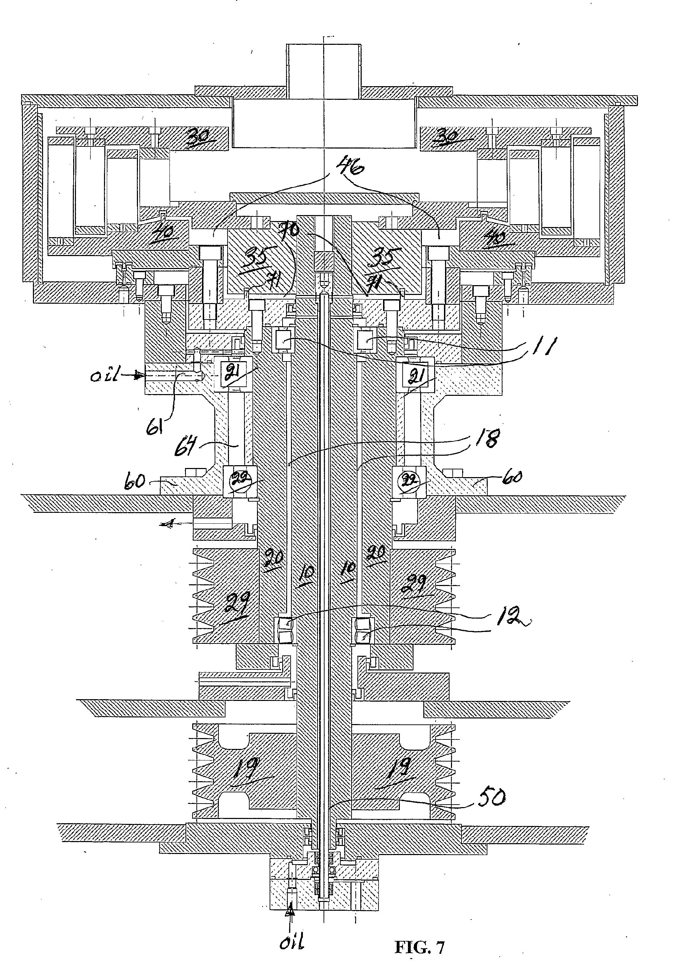

The inner and outer shafts 10 and 20 of the impact mill shown in figures 2 and 4-6 are driven by one and the same motor. The arrangement according the invention is also suitable in constructions where the shafts are driven by separate motors. Figure 7 shows a vertical section of such an impact mill where the shafts 10 and 20 nonetheless are mounted on bearings directly to each other. The shafts 10 and 20 are equipped with separate vee belt wheels 19 and 29, respectively. Also in this construction, a cylindrical space has, as in figures 2 and 4-6, been made in the inner shaft. Into the cylindrical space has been fitted a pipe 50, which divide the space in an oil space and a gas or liquid space. The oil needed for the bearings 11 and 12 of the inner shaft is conveyed from below into the oil space, created by the pipe, wherefrom it discharges according to figure 4 above the bearing 11 and flows in the space 18 to the lower bearing 12. For the lubrication of the bearings 21 and 22 of the outer shaft, an oil channel 61 has been made in she shaft support 60, whereby oil is allowed to flow to the upper bearing 21 of the outer shaft and further therefrom in the space 64 between the support and the outer shaft to the lower bearing 22 and then out. Also in this case air or another suitable gas or liquid is conveyed inside the pipe 50 into the space 70 between the rotor brackets 35 and 45 to ensure the formation of overpressure in the space 46 behind the lower rotor 40. The overpressure prevents the material to be treated in the impact mill from damaging the gasket 71 and moving forward into the bearings of the shafts.

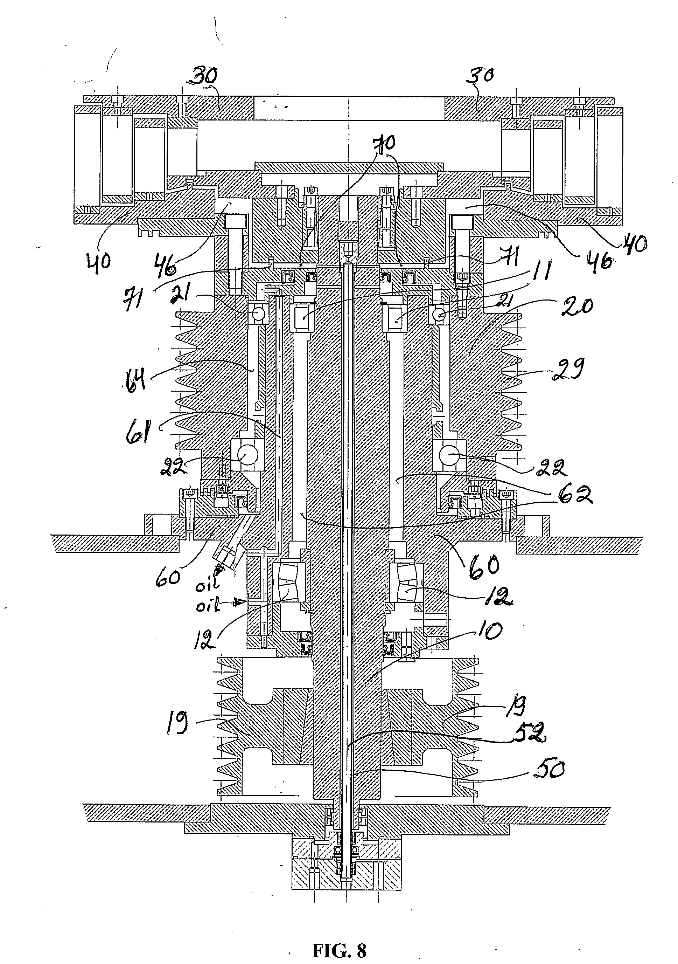

Figure 8 shows a vertical cross section of an impact mill, where the shafts 10 and 20 are conventionally driven by two separate motors and where the shafts are mounted on bearings to a fixed shaft support 60 between the shafts. The shafts 10 and 20 are, as in figure 7, equipped with separate vee belt wheels 19 and 29. Also in this construction, a cylindrical space has, as in figures 2 and 4-7, been made in the inner shaft. Into the cylindrical space has been fitted a pipe 50, which divide the space in an oil space and a gas or liquid space. The oil needed for the bearings 11 and 12 of the inner shaft is conveyed from below into the oil space, created by the pipe, wherefrom it discharges according to figure 4 above the bearing 11 and flows in the space 62 between the inner shaft and the support 60 to the lower bearing 12. For the lubrication of the bearings 21 and 22 of the outer shaft, an oil channel 61 has been made in the shaft support 60. The oil is conveyed in the channel 61 to the upper bearing 21 of the outer shaft and therefrom into the space 64 between the support and the outer shaft to the lower bearing 22. Also in this case air or another suitable gas or liquid is conveyed in the inner space 52 of the pipe 50 into the space 70 between the rotor brackets 35 and 45 to ensure the formation of overpressure in the space 46 behind the lower rotor 40. The overpressure prevents the material to be treated in the impact mill from damaging the gasket 71 and moving forward into the bearings of the shafts.

The lubrication arrangement described above, where the oil needed for the bearings of the inner shaft is conveyed in a channel arranged in the inner shaft, relates to cases where the inner shaft and the outer shaft are mounted on bearings directly to each other (figures 2 and 4-7). This mounting arrangement is necessary in situations where the shafts are driven by one and the same motor (figures 2 and 4), but it may also be useful in situations where the shafts are driven by separate motors (figure 7). Compared to the conventional solution, where a fixed support is located between the shafts, this construction is preferable, because the requirement of space is smaller in the width direction as well as in the hight direction because the driving wheels of the shafts are located on the same side of the shaft support (in figure 7 beneath the support). In this solution the driving wheel of the outer shaft is also much smaller than in conventional constructions, and this leads to a remarkable energy saving. Additionally, in this arrangement only one return route for the oil is needed.

The lubrication arrangement according to the invention is preferable also in the lubrication of the shafts where the shafts are driven by separate motors and mounted in bearings on a fixed support 60 (figure 8). In this case the benefit is due to the fact that the number of channels in the support 60 can be reduced and that the channel for the lubrication oil for the inner shaft as well as the channel for the gas or liquid can be located in the inner shaft.

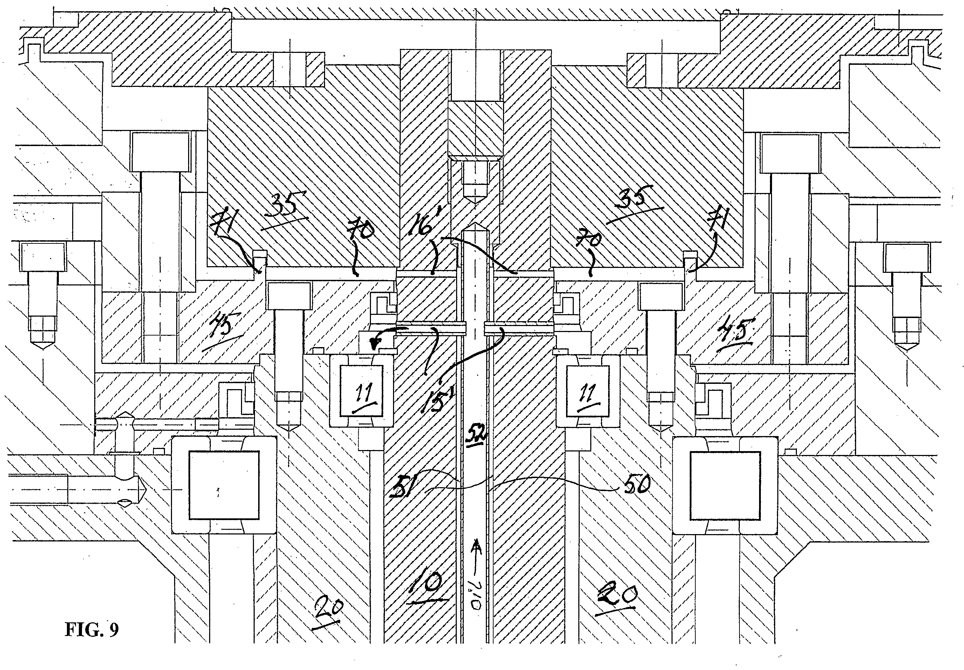

Figures 2 and 4-8 show cases where the gas or liquid is conveyed in the inner space 52 of the pipe and the oil for lubrication of the bearings of the inner shaft is conveyed in the space 51 outside the pipe. Alternatively, the lubrication oil can be conveyed in the inner space 52 of the pipe, and the gas or liquid in the space 51 outside the pipe, as shown by figure 9. It can be seen that the oil is conveyed from the inner space 52 of the pipe to the upper bearing 11 in a channel 15' made into the inner shaft, said channel opening into the periphery of the inner shaft. From the space 51 outside the pipe, in the inner shaft is made a channel 16', connected to the pipe space 51 and opening to the periphery of the inner shaft. Thus air or another suitable gas or a liquid fed into the space 51 is allowed to discharge into the space 70 between the brackets 35 and 45 of the upper and the lower rotor.

In the solution disclosed by figure 2 and 4-9 the pipe 50 is rigidly fitted to the inner shaft and rotates in phase with the inner shaft. It would also be possible to keep the pipe stationary for example so that it at its lower end would be rigidly anchored in the bottom support and at its upper end mounted on bearings to the inner side of the rotating inner shaft. However, such a solution may be more difficult to realize and could result in a less reliable operation.

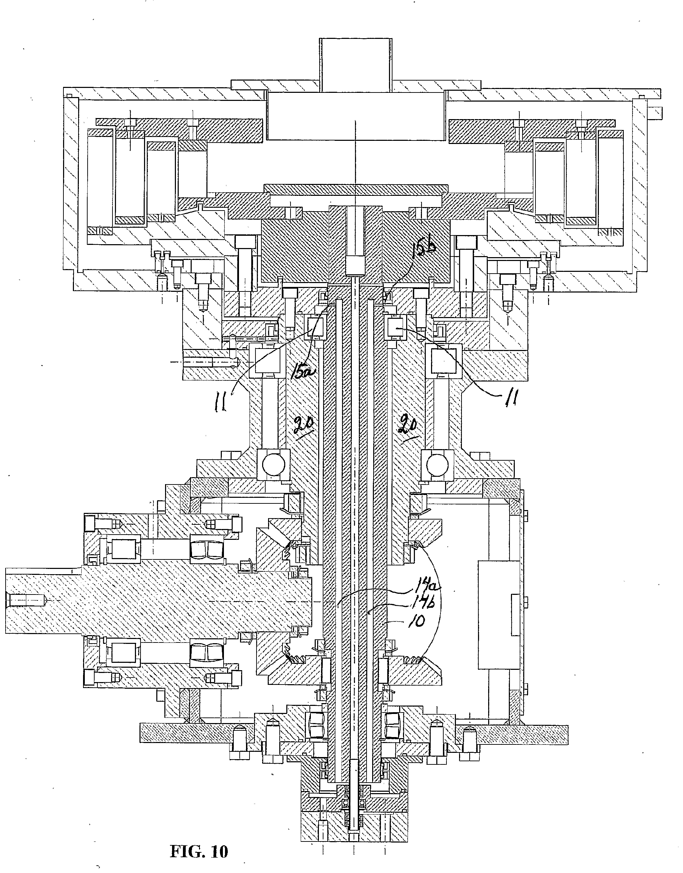

Figure 10 shows an alternative wherein in the inner shaft 10 have been arranged, instead of one single oil channel, several channels 14a, 14b,...., extending in the longitudinal direction of the shaft. To obtain a smooth operation, the number of the channels 14a, 14b, .... is preferably at least two, preferably at least three. Further, the channels are preferably of the same size and that they are symmetrically located. The channels 14a, 14b.... are in connection with the horizontal channels 15a, 15b...., made into the inner shaft, wherefrom the oil is discharged above the bearing 11.

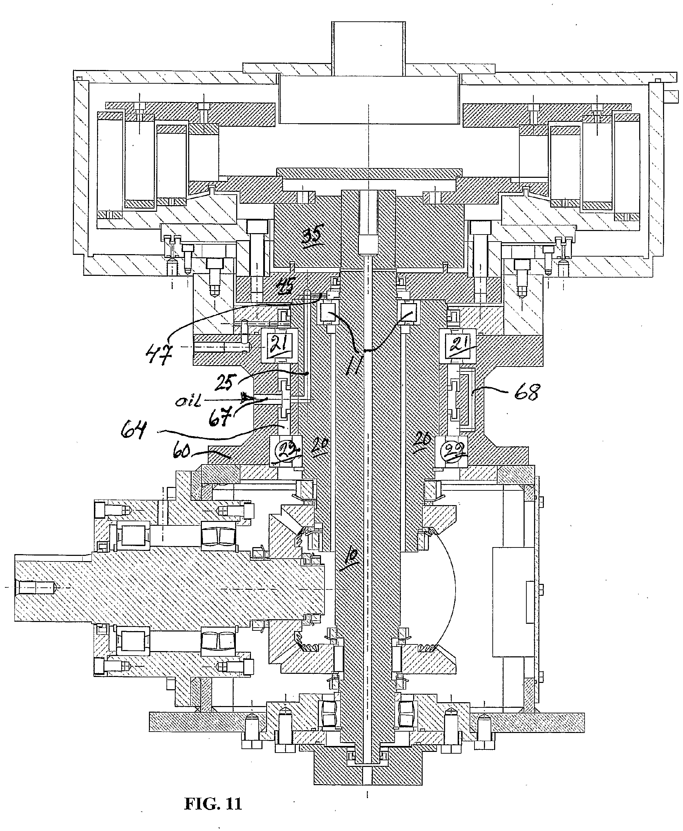

In the solutions shown by figures 2 and 4-7 and 9-10 the inner shaft and the outer shaft are mounted on bearings directly to each other. The oil channel(s) needed for lubrication of the inner shaft and the gas- or liquid channel are located into the inner shaft. Figure 11 shows an alternative solution, where into the outer shaft 20 has been arranged an oil channel 25, extending in the longitudinal direction of the shaft, where said oil channel is in connection with an oil channel 67 made in the shaft support. In the bracket 45 of the lower rotor has been made a channel 47, which is in connection with channel 25 and which opens above the upper bearing 11 of the inner shaft. Into the support 60 has been made a channel 68, to enable the oil returning from the upper bearing 21 of the outer shaft to flow to the lower bearing 22. Alternatively, the oil to be conveyed to the upper bearing of the inner shaft could be the oil used to lubricate the bearings of the outer shaft. In this case the arrangement of a separate oil channel 67 into the shaft support could be avoided. In this case the oil flows into the channel 25 from the space 64 between the outer shaft and the shaft support.

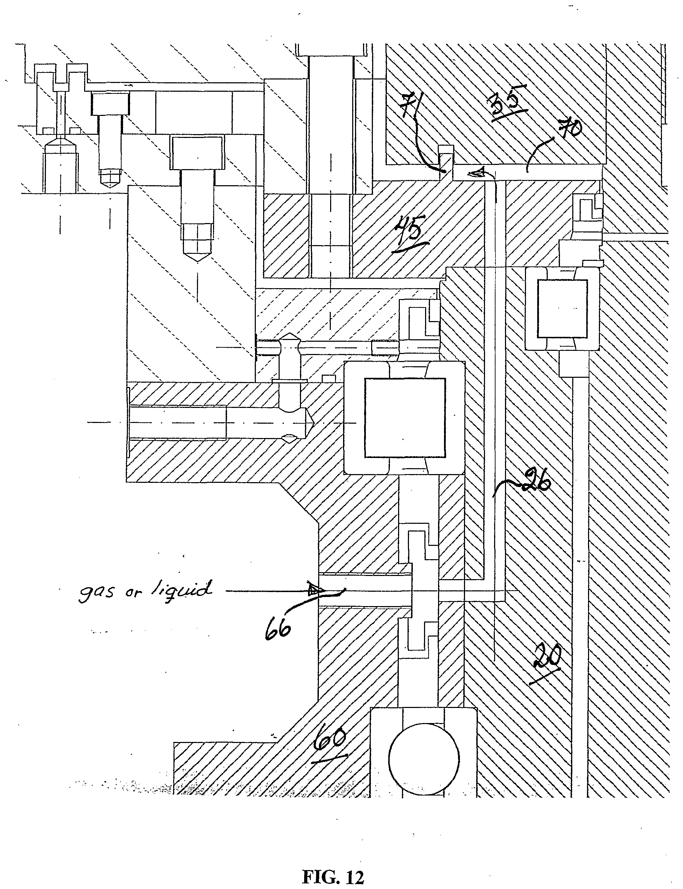

Figure 12, which shows the upper part of the impact mill enlarged and along a shaft section different from that shown in figure 11, shows the gas or liquid channel 26 extending in the outer shaft, where said channel is in connection with a channel 66 made into the shaft support. The channel 66 is located at an altitude different from that of the oil channel shown in figure 11. The gas or liquid discharges into the space 70 between the brackets 35 and 45 of the rotors. Alternatively, it would of course be possible to make the gas or liquid channel into the inner shaft.

In all the situations described above, air could be simultaneously fed into the oil flowing to the bearings to create an aerosol which operates as a lubricant. In such a case an opening must of course be made somewhere for the discharge of air.

For the protection of the bearings and/or gaskets, air or another suitable gas is preferable used. In certain cases, however, no air or other gas at all should be allowed to discharge into the material to be treated. In such situations it is possible to use water or another liquid which does not cause harm to the material to be treated.

There are situations where no air or other suitable gas or liquid is needed for the protection of the bearings of the shafts. As an example of such situations can be mentioned the use of the impact mill to disperse liquids, where there are no solid particles that could move into the bearings. In most cases, however, it is necessary to feed air or another gas or liquid into the space between the rotor brackets to create overpressure into the space behind the lower rotor so as to prevent particles from moving into the bearings. The protection of the bearings and/or gaskets can alternatively be performed otherwise than by use of a gas or liquid.

Figures 2 and 4 show that onto the shaft 2 driven by the motor a conic gear 3 is fitted, which drives the conic gear 13 on the inner shaft 10 as well as the conic gear 23 on the outer shaft 20. The shaft 2 can naturally also be used as transmission apparatus for other apparatuses belonging to the impact mill or in connection hereto. As an example of such apparatuses can be mentioned an after-mixer for the material treated or a screw conveyor for the material as described in the patent publication WO 2006/040391.

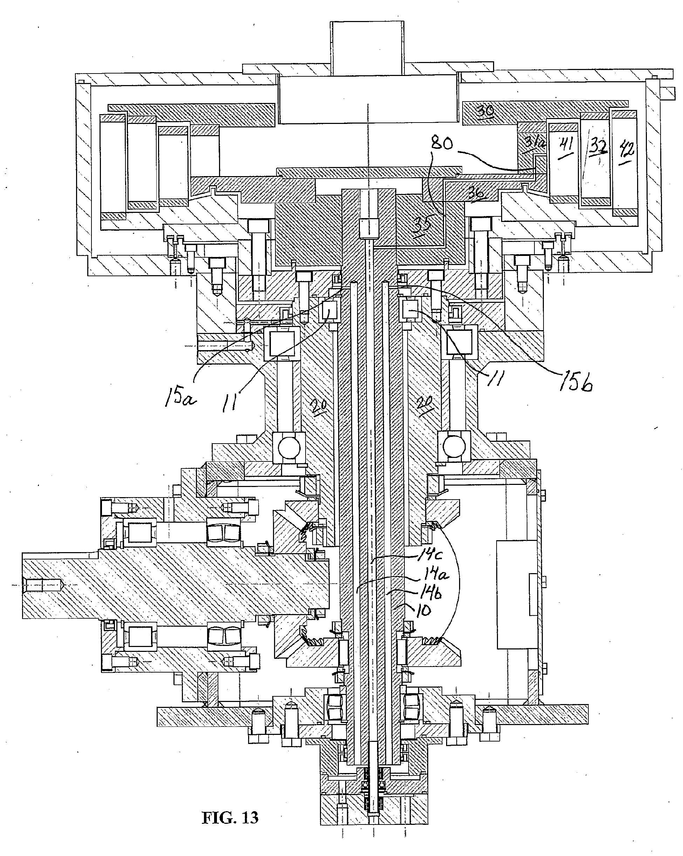

There are also situations where it may be preferable to feed a material component to be treated just between the blade rings and not directly into the feeding opening 6 together with the other components. Figure 13 shows such a solution. The lubrication of the upper bearing 11 of the inner shaft has been arranged as shown in figure 10 by conveying oil in the channels 14a, 14b, 15a and 15b. The channel 14c in the inner shaft is in connection with the channel 80, arranged in the bracket 35 and extended bracket 36 of the upper rotor, and in the blade 31a. It is thus possible to convey a material component in the channels 14c and 80 into the space between the blade rings 31 and 41. If it is desired not to feed the material component until into the space between the blade rings 41 and 32 or into the space between the blade rings 32 and 42, then the channel 80 can be continued into the upper rotor 30 and therefrom to a blade of the blade ring 32 (not shown in the figure). The feeding route for the gas or liquid for the protection of the bearings and gaskets has not been shown in figure 13. However, it is evident that it can be arranged for example by fitting a pipe 50 into the cylindrical space 14c as shown by figure 4, allowing or example the material component to be conveyed in the inner space 52 of the pipe, and the gas or liquid needed for protection of the bearings and gaskets to be conveyed in the space 51 surrounding the pipe.

In the exemplified solutions described above as well as in the claims below, wordings referring to direction, such as upper end, lower end, upper bearing, lower bearing etc. have been used. Such wording shall, however, not be interpreted to mean that the impact mill in operation should be in upright position. Instead, it may be inclined in different ways, for example as shown in patent publication WO 2006/123010, figure 8. The word upper shall throughout the text be interpreted to mean the end or element directed towards the rotor, and word lower shall throughout the text be interpreted to mean the end or element directed away from the rotor.

The invention is not intended to be limited to the exemplified embodiments presented above. On the contrary, the invention shall be broadly interpreted within the scope of the claims presented below.

## Claims

1. An impact mill having a rotor apparatus comprising two concentric rotors (30, 40) equipped with coaxial shafts (10, 20), said rotors comprising blade rings (31, 32, 41, 42), said blade rings being located within each other, and wherein said shafts (10,20) are arranged within each other on the same side of the rotors (30, 40), **characterized in that**
into the outer shaft (20) is made at least one channel (25), running in the shaft, for oil needed for lubrication of the bearings (11, 12) of the inner shaft.

2. The impact mill according to claim 1, **characterized in that** the shafts (10, 10) are mounted in bearings directly to each other.

3. The impact mill according to claim 2, **characterized in that** the shafts (10, 20) are by a transmission apparatus driven by one and the same driving apparatus.

4. The impact mill according to claim 3, **characterized in that** the transmission apparatus comprises a conic gear (3) fitted on the shaft (2) driven by a motor, said conic gear (3) being arranged to drive conic gears (13, 23) to be driven, said conic gears (13, 23) being fitted on the shafts (10, 20).

5. The impact mill according to claim 2, **characterized in that** the shafts (10, 20) are driven by separate driving apparatuses.

6. The impact mill according to claim 1, **characterized in that** the shafts (10, 20) are mounted in bearings onto a fixed shaft support (60), located between said shafts.

7. The impact mill according to any of the foregoing claims, **characterized in that** into the shaft support (60) is formed an oil channel (61) for the lubrication oil for the bearings (21, 22) of the outer shaft (20).

8. The impact mill according to any of the foregoing claims, **characterized in that** into the inner shaft is, for conveying of a material component, formed a channel (14c) which is in connection with a channel (80) formed into the bracket (35) and into the extended bracket (36) of the upper rotor, and into the blade (31a).

9. Method for lubrication of the bearings of the shafts in an impact mill, where said impact mill has a rotor apparatus comprising two concentric rotors (30, 40) equipped with coaxial shafts (10, 20), said rotors comprising blade rings (31, 32,41, 42), said blade rings being located within each other, and wherein said shafts (10, 20) are arranged within each other on the same side of the rotors (30, 40), **characterized in that**
lubrication oil for lubricating the bearings (11, 12) of the inner shaft is conveyed in a channel (25), formed into the outer shaft (20) and running in the shaft, and in a channel (15 or 47) in connection with the aforementioned channel, to the upper bearing (11) of the inner shaft, and therefrom further into the free space (18) between the shafts (10, 20), respectively into the space (62) between the inner shaft (10) and the shaft support (62) to the lower bearing (12) of the inner shaft, and therefrom out.

## Patentansprüche

1. Schlagmühle mit einer Rotorvorrichtung, die zwei konzentrische Rotoren (30, 40) umfasst, die mit koaxialen Wellen (10, 20) ausgerüstet sind, wobei die Rotoren Schaufelringe (31, 32, 41, 42) umfassen, wobei die Schaufelringe ineinander angeordnet sind, und wobei die Wellen (10, 20) ineinander auf der gleichen Seite der Rotoren (30, 40) angeordnet sind,
**dadurch gekennzeichnet, dass**
zumindest ein Kanal (25) in die Außenwelle (20) eingearbeitet ist, der in der Welle verläuft, um Öl zu erhalten, das zur Schmierung der Lager (11, 12) der Innenwelle erforderlich ist.

2. Schlagmühle nach Anspruch 1, **dadurch gekennzeichnet, dass** die Wellen (10, 20) in Lagern direkt aneinander montiert sind.

3. Schlagmühle nach Anspruch 2, **dadurch gekennzeichnet, dass** die Wellen (10, 20) von einer Getriebevorrichtung von ein und derselben Antriebsvorrichtung angetrieben werden.

4. Schlagmühle nach Anspruch 3, **dadurch gekennzeichnet, dass** die Übertragungsvorrichtung ein Kegelradgetriebe (3) umfasst, das auf der von einem Motor angetriebenen Welle (2) montiert ist, wobei das Kegelradgetriebe (3) so angeordnet ist, dass es die Kegelradgetriebe (13, 23) antreibt, die angetrieben werden sollen, wobei die Kegelradgetriebe (13, 23) auf den Wellen (10, 20) montiert sind.

5. Schlagmühle nach Anspruch 2, **dadurch gekennzeichnet, dass** die Wellen (10, 20) durch separate Antriebsvorrichtungen angetrieben werden.

6. Schlagmühle nach Anspruch 1, **dadurch gekennzeichnet, dass** die Wellen (10, 20) in Lagern auf einer festen Wellenabstützung (60) gelagert sind, die sich zwischen den Wellen befindet.

7. Schlagmühle nach einem der vorstehenden Ansprüche, **dadurch gekennzeichnet, dass** in der Wellenabstützung (60) ein Ölkanal (61) für das Schmieröl für die Lager (21, 22) der Außenwelle (20) ausgebildet ist.

8. Schlagmühle nach einem der vorstehenden Ansprüche, **dadurch gekennzeichnet, dass** ein Kanal (14c) in der Innenwelle zum Fördern einer Materialkomponente ausgebildet ist, der in Verbindung mit einem Kanal (80) steht, der in der Halterung (35) und in der verlängerten Halterung (36) des oberen Rotors, und in der Schaufel (31a) ausgebildet ist.

9. Verfahren zum Schmieren der Lager der Wellen in einer Schlagmühle, wobei die Schlagmühle eine Rotorvorrichtung hat, die zwei konzentrische Rotoren (30, 40) umfasst, die mit koaxialen Wellen (10, 20) ausgerüstet sind, wobei die Rotoren Schaufelringe (31, 32, 41, 42) umfassen, wobei die Schaufelringe ineinander angeordnet sind, und wobei die Wellen (10, 20) ineinander auf der gleichen Seite der Rotoren (30, 40) angeordnet sind,
**dadurch gekennzeichnet, dass**
das Schmieröl zum Schmieren der Lager (11, 12) der Innenwelle in einem Kanal (25), der in der Außenwelle (20) ausgebildet ist und in der Welle verläuft, und in einem Kanal (15 oder 47) in Verbindung mit dem vorgenannten Kanal zum oberen Lager (11) der Innenwelle, und von dort weiter in den Freiraum (18) zwischen den Wellen (10, 20) bzw. in den Raum (62) zwischen der Innenwelle (10) und der Wellenabstützung (62) zum unteren Lager (12) der Innenwelle und daraus hinaus gefördert wird.

## Revendications

1. Broyeur à chocs ayant un appareil à rotors comprenant deux rotors concentriques (30, 40) équipés d'arbres coaxiaux (10, 20), lesdits rotors comprenant des couronnes d'aube (31, 32, 41, 42), lesdits couronnes d'aube étant positionnées les unes à l'intérieur des autres, et dans lequel lesdits arbres (10, 20) sont agencés les uns à l'intérieur des autres du même côté des rotors (30, 40),
**caractérisé en ce que** :
dans l'arbre externe (20), on réalise au moins un canal (25) s'étendant dans l'arbre, pour l'huile nécessaire à la lubrification des paliers (11, 12) de l'arbre interne.

2. Broyeur à chocs selon la revendication 1, **caractérisé en ce que** les arbres (10, 20) sont montés dans des paliers directement entre eux.

3. Broyeur à chocs selon la revendication 2, **caractérisé en ce que** les arbres (10, 20) sont entraînés, grâce à un appareil de transmission, par un seul et même appareil d'entraînement.

4. Broyeur à chocs selon la revendication 3, **caractérisé en ce que** l'appareil de transmission comprend un engrenage conique (3) monté sur l'arbre (2) entraîné par un moteur, ledit engrenage conique (3) étant agencé pour entraîner des engrenages coniques (13, 23) à entraîner, lesdits engrenages coniques (13, 23) étant montés sur les arbres (10, 20).

5. Broyeur à chocs selon la revendication 2, **caractérisé en ce que** les arbres (10, 20) sont entraînés par des appareils d'entraînement séparés.

6. Broyeur à chocs selon la revendication 1, **caractérisé en ce que** les arbres (10, 20) sont montés sur des paliers sur un support d'arbre fixe (60), positionné entre lesdits arbres.

7. Broyeur à chocs selon l'une quelconque des revendications précédentes, **caractérisé en ce que** dans le support d'arbre (60), on forme un canal d'huile (61) pour l'huile de lubrification pour les paliers (21, 22) de l'arbre externe (20).

8. Broyeur à chocs selon l'une quelconque des revendications précédentes, **caractérisé en ce que** dans l'arbre interne, pour transporter un composant de matériau, on forme un canal (14c) qui est raccordé avec un canal (80) formé dans la console (35) et dans la console étendue (36) du rotor supérieur, et dans l'aube (31a).

9. Procédé pour la lubrification des paliers des arbres dans un broyeur à chocs, où ledit broyeur à chocs a un appareil à rotors comprenant deux rotors concentriques (30, 40) équipés d'arbres coaxiaux (10, 20), lesdits rotors comprenant des couronnes d'aube (31, 32, 41, 42), lesdits couronnes d'aube étant positionnées à l'intérieur les unes des autres, et dans lequel lesdits arbres (10, 20) sont agencés à l'intérieur les uns des autres sur le même côté des rotors (30, 40),
**caractérisé en ce que** :
l'huile de lubrification pour la lubrification des paliers (11, 12) de l'arbre interne est transportée dans un canal (25), formé dans l'arbre externe (20) et s'étendant dans l'arbre, et dans un canal (15 ou 47) conjointement avec le canal mentionné précédemment, jusqu'au palier supérieur (11) de l'arbre interne, et à partir de ce dernier dans l'espace libre (18) entre les arbres (10, 20), respectivement dans l'espace (62) entre l'arbre interne (10) et le support d'arbre (62) jusqu'au palier inférieur (12) de l'arbre interne, et ressortant par ce dernier.
